# EUROPEAN PATENT SPECIFICATION

(11) **EP 4 164 156 B1**
(45) Date of publication and mention of the grant of the patent: **19.08.2026**
(21) Application number: 20939441.0
(22) Date of filing: 05.06.2020
(51) Int. Cl.: H04L 1/18, H04W 72/04, H04L 1/1607, H04L 1/1829

(54) **METHOD AND APPARATUS FOR DETERMINING VALUE OF CONTINUOUS DURATION FIELD**
VERFAHREN UND VORRICHTUNG ZUR BESTIMMUNG DES WERTES EINES DAUERFELDES
PROCÉDÉ ET APPAREIL POUR DÉTERMINER LA VALEUR D'UN CHAMP DE DURÉE CONTINU

(43) Date of publication of application: 12.04.2023
(73) Proprietor: Beijing Xiaomi Mobile Software Co., Ltd., Beijing 100085 (CN)
(72) Inventor: DONG, Xiandong, Beijing 100085 (CN)
(74) Representative: dompatent
(86) International application number: PCT/CN2020/094650
(87) International publication number: WO 2021/243699

(56) References cited:
- CN-A- 104 904 136
- CN-A- 109 121 206
- CN-A- 110 419 192
- US-A1- 2013 301 569
- US-A1- 2016 330 788
- US-A1- 2016 380 727
- US-A1- 2017 195 142
- US-A1- 2020 119 885

## Description

### TECHNICAL FIELD

The present disclosure relates to the field of communication technologies, and in particular to a method for determining a value of a duration field, an apparatus for determining a value of a duration field, an electronic device, and a computer readable storage medium.

### BACKGROUND

In a process of communication between a station, STA, and an access point, AP, a transmitter can transmit a frame to a receiver through one connection therebetween, and the receiver can feed back an acknowledgement, ACK, message frame to the transmitter. The status (for example, received, or not received) of receiving the frame by the receiver can be fed back to the transmitter through the ACK message frame.

The ACK message frame can include a media access control, MAC, frame header and a frame check sequence, FCS, where the MAC frame header can include a duration field, and a value of the duration field can indicate a length of time during which it is necessary for the receiver to occupy the above connection.

With the development of communication technologies, the STA and the AP are not limited to communicating through one connection, but can communicate simultaneously through a plurality of connections. Thus, it is difficult to adapt to this scenario through the present method for determining the value of the duration field.
US 2016/330788 A1 relates to a mobile radio communication device, including: a receiver configured to receive data; an access point identification circuit configured to determine whether the received data is received from or sent to an access point corresponding to the mobile radio communication device; and a response indication deferral setting circuit configured to set a response indication deferral parameter based on the determination of the access point identification circuit.
US 2016/380727 A1 relates to a method for retransmission in a wireless LAN, including: an STA receives an RTS frame from an AP; the STA transmits a CTS frame to the AP in response to the RTS frame; the STA receives an initial data frame from the AP after transmitting the CTS frame; if decoding on the initial data frame is impossible, the STA transmits a retransmission request frame to the AP; and the STA receives a retransmission data frame from the AP in response to the retransmission request frame.
US 2017/195142 A1 relates to a technique for reducing interference in a communication system including a plurality of wireless devices. A first device transmits an RTS-TRN frame including a Request to Send (RTS) portion and a first beam training sequence to determine whether a communication medium is available to communicate with a second device. If the communication medium is available, the second device transmits a CTS-TRN frame including a Clear to Send (CTS) portion and a second beam training sequence. One or more neighboring devices that receive the RTS-TRN frame and/or the CTS-TRN frame configure their respective antennas to generate one or more nulls aimed at the first and second devices when transmitting signals, as long as the first and second devices are communicating based on a duration field in the RTS-TRN frame and/or CTS-TRN frame. This reduces interference at the first and/or second devices.

### SUMMARY

In view of this, embodiments of the present disclosure provide a method for determining a value of a duration field, an apparatus for determining a value of a duration field, an electronic device, and a computer readable storage medium to solve technical problems in the related art.

The invention is set out in independent claims 1, 8 and 15.

### BRIEF DESCRIPTION OF THE DRAWINGS

In order to explain the technical solutions more clearly in the embodiments of the present disclosure, the drawings required for the description of the embodiments will be briefly introduced below. It is obvious that the drawings in the following description are only some embodiments of the present disclosure. For those of ordinary skill in the art, other drawings can also be obtained based on these drawings, without paying any creative labor.
FIG. 1 is a schematic flowchart illustrating a method for determining a value of a duration field according to an embodiment of the present disclosure.
FIG. 2 is a schematic flowchart illustrating another method for determining a value of a duration field according to an embodiment of the present disclosure.
FIG. 3 is a schematic flowchart illustrating yet another method for determining a value of a duration field according to an embodiment of the present disclosure.
FIG. 4 is a schematic flowchart illustrating yet another method for determining a value of a duration field according to an embodiment of the present disclosure.
FIG. 5 is a schematic flowchart illustrating yet another method for determining a value of a duration field according to an embodiment of the present disclosure.
FIG. 6 is a schematic block diagram illustrating an apparatus for determining a value of a duration field according to an embodiment of the present disclosure.
FIG. 7 is a schematic block diagram illustrating another apparatus for determining a value of a duration field according to an embodiment of the present disclosure.
FIG. 8 is a schematic block diagram illustrating an apparatus for determining a value of a duration field according to an embodiment of the present disclosure.

### DETAILED DESCRIPTION OF THE EMBODIMENTS

The technical solutions in the embodiments of the present disclosure will be described clearly and completely below in combination with the drawings in the embodiments of the present disclosure.

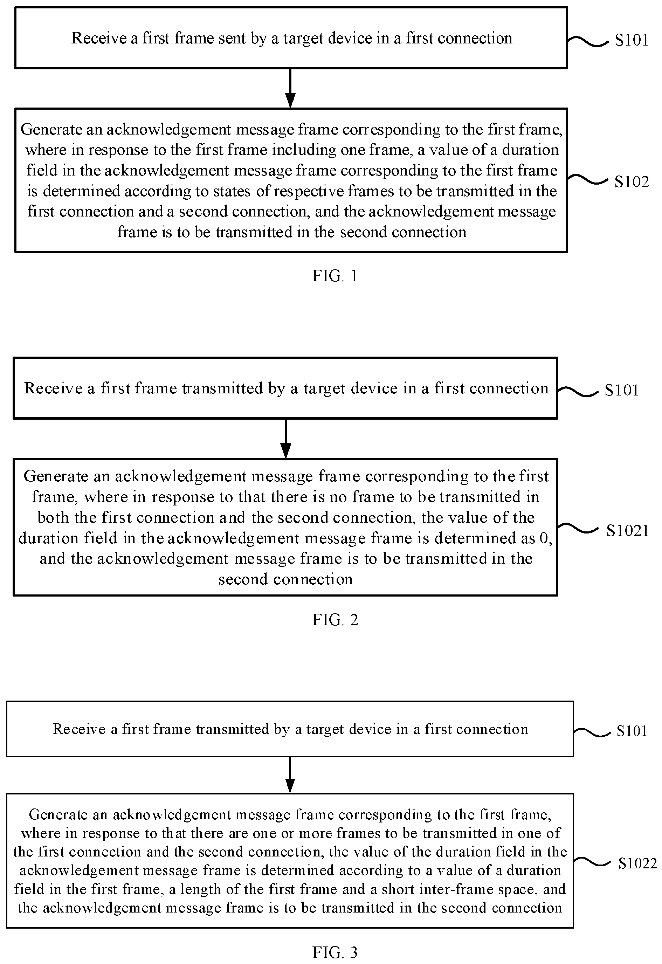

FIG. 1 is a schematic flowchart illustrating a method for determining a value of a duration field according to an embodiment of the present disclosure. The method shown in this embodiment can be applied to a terminal including, but not limited to, an electronic device such as a mobile telephone, a tablet computer, a wearable device, a personal computer, an industrial sensor, and an Internet of Things, IoT, device. The terminal can be used as a station, STA, or an access point, AP.

As shown in FIG. 1, the method for determining the value of the duration field can include the following steps.

In step S101, a first frame transmitted by a target device is received in a first connection.

In step S102, an acknowledgement message frame corresponding to the first frame is generated, where in response to the first frame including one frame, a value of a duration field in the acknowledgement message frame corresponding to the first frame is determined according to states of respective frames to be transmitted in the first connection and a second connection, and the acknowledgement message frame is to be transmitted in the second connection.

In some embodiments, the respective frames to be transmitted can include frames to be transmitted from the target device to the terminal, or from the terminal to the target device.

It should be noted that the frame to be transmitted can be a new frame, or a frame required to be transmitted again because of unsuccessful transmission, namely, a retransmitted frame.

In all embodiments of the present disclosure, the frame to be transmitted can be a frame carrying data, a frame carrying signaling and/or a reference signal, or a frame carrying any form of content, which is not limited to the embodiments of the present disclosure.

In one embodiment, the target device and the terminal can communicate simultaneously through a plurality of connections, where each of the plurality of connections can correspond to a different frequency band, for example, a frequency band of 2.4GHz, a frequency band of 5.8GHz, and a frequency band of 6-7GHz; and can also correspond to a different bandwidth part in the above three frequency bands.

The target device can transmit the first frame to the terminal in the first connection. The first frame can be a frame for carrying a Quality of Service, QoS, and the terminal can feed back the acknowledgement message frame corresponding to the first frame to the target device in the second connection.

In this case, the target device and the terminal do not communicate through one connection, but communicate through a plurality of connections. Therefore, the state of the frame to be transmitted in each of the plurality of connections may be different.

For example, for the first connection and the second connection, there may be no frame to be transmitted in both the first connection and the second connection, or there may be one or more frames to be transmitted in one of the first connection and the second connection, or there may be one or more frames to be transmitted in both the first connection and the second connection.

However, for the first frame received in the first connection, the terminal only feeds back one acknowledgement message frame to the target device in the second connection, and thus, it is necessary to use the value of the duration field in the acknowledgement message frame to indicate the length of time during which the first connection and/or the second connection is occupied. In some embodiments, the length of time during which the first connection and/or the second connection is occupied is a length of time during which the first connection and/or the second connection is occupied after the acknowledgement message frame is fed back by the terminal to the target device.

Specifically, in the embodiment of the present disclosure, the value of the duration field in the acknowledgement message frame corresponding to the first frame can be determined according to the states of the respective frames to be transmitted in the first connection and the second connection. That is, it is necessary to consider not only whether there is the frame to be transmitted in the first connection for receiving the first frame, but also whether there is the frame to be transmitted in the second connection for transmitting the acknowledgement message frame, instead of only considering whether there is the frame to be transmitted in one of the two connections. Therefore, it is possible to comprehensively and accurately determine a length of time during which the first connection and/or the second connection is occupied after the acknowledgement message frame is fed back to the target device, and then accurately determine the value of the duration field used to indicate the length of time in the acknowledgement message frame.

It should be noted that besides the duration field, the acknowledgement message frame can also include other fields, and values of the other fields can also be determined according to the states of the respective frames to be transmitted in the first connection and the second connection.

FIG. 2 is a schematic flowchart illustrating another method for determining a value of a duration field according to an embodiment of the present disclosure. As shown in FIG. 2, the value of the duration field in the acknowledgement message frame corresponding to the first frame is determined according to the states of the respective frames to be transmitted in the first connection and the second connection. The embodiment shown in FIG. 2 can be implemented together with the embodiment shown in FIG. 1, or implemented separately. The method includes the following step.

In step S1021, in response to that there is no frame to be transmitted in both the first connection and the second connection, the value of the duration field in the acknowledgement message frame is determined as 0.

In one embodiment, when there is no frame to be transmitted in both the first connection and the second connection, it is not necessary for the terminal to occupy the first connection and/or the second connection to continuously communicate with the target device. Therefore, it can be determined that the value of the duration field in the acknowledgement message frame is 0. That is, after the acknowledgement message frame is fed back to the target device, it is not necessary for the terminal to continuously occupy the first connection and/or the second connection.

FIG. 3 is a schematic flowchart illustrating yet another method for determining a value of a duration field according to an embodiment of the present disclosure. As shown in FIG. 3, the value of the duration field in the acknowledgement message frame corresponding to the first frame is determined according to the states of the respective frames to be transmitted in the first connection and the second connection. The embodiment shown in FIG. 3 can be implemented together with any one of the embodiments shown in FIG. 1 and FIG. 2, or implemented separately. The method includes the following step.

In step S1022, in response to that there are one or more frames to be transmitted in one of the first connection and the second connection, the value of the duration field in the acknowledgement message frame is determined according to a value of a duration field in the first frame, a length of the first frame and a short inter-frame space.

It should be noted that the length of the frame described in this embodiment and subsequent embodiments refers to a length in a time domain. Specifically, the length of the frame can indicate the length of time.

In one embodiment, there is also a duration field in the first frame transmitted by the target device in the first connection to the terminal, and a value of the duration field in the first frame is used to indicate a length of time during which it is necessary for the terminal to occupy the first connection and/or the second connection. The length of time can include the length of the first frame, the short inter-frame space, SIFS, and a length of the respective frames to be transmitted in the first connection and/or the second connection.

However, after the acknowledgement message frame is fed back to the target device, it is necessary for the terminal to continuously occupy the first connection and/or the second connection to continuously communicate with the target device, so as to receive the frame transmitted by the target device, or transmit the frame to the target device. Therefore, after the acknowledgement message frame is fed back to the target device, a length of time during which it is necessary for the terminal to continuously occupy the first connection and/or the second connection is equal to a length of the respective frames to be transmitted in the first connection and/or the second connection. Therefore, the value of the duration field in the acknowledgement message frame can be determined according to the value D1 of the duration field in the first frame, the length L1 of the first frame and the short inter-frame space SIFS.

Specifically, the value of the duration field in the acknowledgement message frame is equal to D1-L1-SIFS. For example, D1=100us, L1=10us, SIFS=16us, and the value of the duration field in the acknowledgement message frame is equal to 100us-10us-16us=74us.

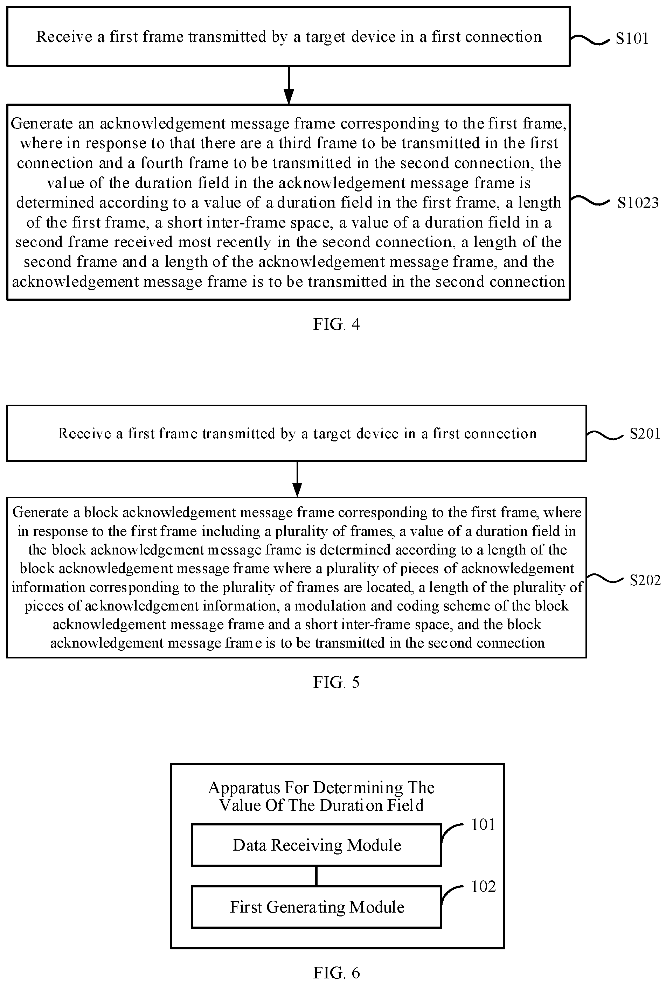

FIG. 4 is a schematic flowchart illustrating a method for determining a value of a duration field according to an embodiment of the present disclosure. As shown in FIG. 4, the value of the duration field in the acknowledgement message frame corresponding to the first frame is determined according to the states of the respective frames to be transmitted in the first connection and the second connection. The embodiment shown in FIG. 4 can be implemented together with any one of the embodiments shown in FIG. 1, FIG. 2, and FIG. 3, or implemented separately, which is not limited to the embodiments of the present disclosure. In some embodiments, as shown in FIG. 4, the method includes the following step.

In step S1023, in response to that there are a third frame to be transmitted in the first connection and a fourth frame to be transmitted in the second connection, the value of the duration field in the acknowledgement message frame is determined according to a value of a duration field in the first frame, a length of the first frame, a short inter-frame space, a value of a duration field in a second frame received most recently in the second connection, a length of the second frame and a length of the acknowledgement message frame.

In one embodiment, when there are the third frame to be transmitted in the first connection and the fourth frame to be transmitted in the second connection, after the acknowledgement message frame is fed back to the target device, it is necessary for the terminal to occupy the first connection and/or the second connection to continuously communicate with the target device, so as to receive or transmit the third frame in the first connection and receive or transmit the fourth frame in the second connection.

However, when the acknowledgement message frame is fed back to the target device in the second connection, both the third frame to be transmitted and the fourth frame to be transmitted can be transmitted by the terminal in the second connection. Therefore, after the acknowledgement message frame is fed back to the target device, a length of time during which it is necessary for the terminal to continuously occupy the first connection and/or the second connection is equal to a length of the third frame plus a length of the fourth frame.

In one embodiment, there is also a duration field in the first frame transmitted by the target device in the first connection to the terminal, and a value of the duration field in the first frame is used to indicate a length of time during which it is necessary for the terminal to occupy the first connection. The length of time during which it is necessary for the terminal to occupy the first connection can include the length of the first frame, the short inter-frame space, and a length of the third frame to be transmitted in the first connection.

Therefore, the length L3 of the third frame can be determined according to the value D1 of the duration field in the first frame, the length L1 of the first frame and the short inter-frame space SIFS, where L3 is equal to D1-L1-SIFS.

Correspondingly, there is also a duration field in the second frame transmitted most recently by the target device in the second connection to the terminal, and a value of the duration field in the second frame is used to indicate a length of time during which it is necessary for the terminal to occupy the second connection. It is necessary for the terminal to feed back the acknowledgement message frame to the target device in the second connection. Therefore, the length of time during which it is necessary for the terminal to occupy the second connection can include the length of the second frame, the short inter-frame space, a length of the fourth frame to be transmitted in the second connection and the length of the acknowledgement message frame.

Therefore, the length L4 of the fourth frame can be determined according to the value D2 of the duration field in the second frame, the length L2 of the second frame, the short inter-frame space SIFS and the length ACK of the acknowledgement message frame, where L4 is equal to D2-L2-SIFS-ACK.

After the acknowledgement message frame is fed back to the target device, the length of time during which it is necessary for the terminal to continuously occupy the first connection and/or the second connection is equal to the length of the third frame plus the length of the fourth frame, namely, L3+L4; that is, D1-L1-SIFS+D2-L2-SIFS-ACK=D1+D2-L1-L2-2SIFS-ACK. For example, D1=53us, D2=47us, L1=8us, L2=12us, ACK=8us and SIFS=16us, and the value of the duration field in the acknowledgement message frame is equal to 53us+47us-8us-12us-2*16us-8us=40us.

In some examples, the acknowledgement message frame further includes one or more preset bits configured to identify the states of the respective frames to be transmitted in the first connection and the second connection.

In one embodiment, the preset bits can also be set in the acknowledgement message frame transmitted by the terminal to the target device, and the states of the respective frames to be transmitted in the first connection and the second connection can be identified through the preset bits. For example, the states of the respective frames to be transmitted in the first connection and the second connection can include four types: there is no frame to be transmitted in both the first connection and the second connection; there are one or more frames to be transmitted in one of the first connection and the second connection; there is a third frame to be transmitted in the first connection and a fourth frame to be transmitted in the second connection, and the third frame and the fourth frame are transmitted in the first connection; there is a third frame to be transmitted in the first connection and a fourth frame to be transmitted in the second connection, and the third frame and the fourth frame are transmitted in the second connection. Therefore, the four states can be identified by 2 bits.

Accordingly, after receiving the acknowledgement message frame, the target device can determine the states of the respective frames to be transmitted in the first connection and the second connection according to the preset bits in the acknowledgement message frame, and then determine how to receive the respective frames to be transmitted. For example, it is determined according to the preset bits that there is the third frame to be transmitted in the first connection, the fourth frame to be transmitted in the second connection, and the third frame and the fourth frame are transmitted in the second connection, and then the third frame and the fourth frame can be received in the second connection.

FIG. 5 is a schematic flowchart illustrating yet another method for determining a value of a duration field according to an embodiment of the present disclosure. As shown in FIG. 5, the method includes the following steps.

In step S201, a first frame transmitted by a target device is received in a first connection.

In step S202, a block acknowledgement message frame corresponding to the first frame is generated, where in response to the first frame including a plurality of frames, a value of a duration field in the block acknowledgement message frame is determined according to a length of the block acknowledgement message frame where a plurality of pieces of acknowledgement information corresponding to the plurality of frames are located, a length of the plurality of pieces of acknowledgement information, a modulation and coding scheme of the block acknowledgement message frame and a short inter-frame space, and the block acknowledgement message frame is to be transmitted in the second connection.

In some embodiments, the frame to be transmitted can be transmitted by the target device to the terminal, or transmitted by the terminal to the target device.

It should be noted that the frame to be transmitted can be a new frame, or a frame required to be transmitted again because of unsuccessful transmission, namely, a retransmitted frame.

In all embodiments of the present disclosure, the frame to be transmitted can be a frame carrying data, a frame carrying signaling and/or a reference signal, or a frame carrying any form of content, which is not limited to the embodiments of the present disclosure.

In one embodiment, the target device and the terminal can communicate simultaneously through a plurality of connections, where each of the plurality of connections can correspond to a different frequency band, for example, a frequency band of 2.4GHz, a frequency band of 5.8GHz, and a frequency band of 6-7GHz; and can also correspond to a different bandwidth part in the above three frequency bands.

The target device can transmit the first frame to the terminal in the first connection. The first frame can be a frame for carrying a QoS, and the terminal can feed back the acknowledgement message frame corresponding to the first frame to the target device in the second connection.

In this case, the target device and the terminal do not communicate through one connection, but through a plurality of connections. Therefore, the state of the frame to be transmitted in each of the plurality of connections may be different.

For example, for the first connection and the second connection, there may be no frame to be transmitted in both the first connection and the second connection, or there may be one or more frames to be transmitted in one of the first connection and the second connection, or there may be one or more frames to be transmitted in both the first connection and the second connection.

However, for the first frame received in the first connection, the terminal only feeds back one acknowledgement message frame to the target device in the second connection, and thus, it is necessary to use the value of the duration field in the acknowledgement message frame to indicate the length of time during which the first connection and/or the second connection is occupied. In some embodiments, the length of time during which the first connection and/or the second connection is occupied is a length of time during which the first connection and/or the second connection is occupied after the acknowledgement message frame is fed back by the terminal to the target device.

The target device can transmit the first frame to the terminal in the first connection, and the first frame can include a plurality of frames. For the status of receiving the plurality of frames, the terminal can generate a plurality of pieces of acknowledgement information, and form a block acknowledgement, Block ACK, message frame with the plurality of pieces of acknowledgement information.

For the plurality of pieces of acknowledgement information, it is necessary to perform modulation and coding according to a modulation and coding scheme, MCS, corresponding to the Block ACK message frame. Time taken for performing modulation and coding through different MCSs is different. For example, a modulation and coding speed corresponding to the MCS is v, a length of the plurality of pieces of acknowledgement information is L0, and a length of time for performing modulation and coding on the plurality of pieces of acknowledgement information is L0/v.

The terminal receives a plurality of frames transmitted by the target device in the first connection, and transmits the Block ACK message frame to the target device in the second connection. A value of a duration field in the Block ACK message frame is used to indicate a length of time during which it is necessary for the terminal to further occupy the first connection and/or the second connection after receiving the plurality of frames.

After receiving the plurality of frames, it is necessary for the terminal to further encode on the plurality of acknowledgement information, transmit the Block ACK message frame to the target device, and wait for the short inter-frame space. Therefore, the value of the duration field in the Block ACK message frame can be determined according to the length BA of the Block ACK message frame, the length of the plurality of pieces of acknowledgement information, the MCS of the Block ACK message frame and the short inter-frame space SIFS.

Specifically, the value of the duration field in the Block ACK message frame is equal to BA+L0/v+SIFS.

It should be noted that when the first frame includes a plurality of frames, the states of the respective frames to be transmitted in the first connection and the second connection can also be considered.

For example, there is no frame to be transmitted in both the first connection and the second connection, and the value of the duration field in the Block ACK message frame is equal to BA+L0/v+SIFS.

For example, if there are one or more frames to be transmitted in the first connection and/or the second connection, the number of the frames to be transmitted (for example, n) and a total length Ln of the n frames to be transmitted can be determined first; and then the value of the duration field in the Block ACK message frame is equal to Ln+BA+L0/v+n*SIFS.

In some examples, the plurality of pieces of acknowledgement information is included in a bitmap.

In one embodiment, the plurality of pieces of acknowledgement information can be represented by the bitmap.

Corresponding to the aforementioned embodiments of the method for determining the value of the duration field, the present disclosure further provides embodiments of an apparatus for determining a value of a duration field.

In the embodiments of the present disclosure, any one or more of the embodiments shown in FIG. 2, FIG. 3 and FIG. 4 can be used alone or together with the aforementioned embodiment shown in FIG. 5, and the embodiments of the present disclosure are not limited to this.

FIG. 6 is a schematic block diagram illustrating an apparatus for determining a value of a duration field according to an embodiment of the present disclosure. The apparatus shown in this embodiment can be applied to a terminal including, but not limited to, an electronic device such as a mobile telephone, a tablet computer, a wearable device, a personal computer, an industrial sensor, and an Internet of Things, IoT, device. The terminal can be used as a station, STA, or an access point, AP.

As shown in FIG. 6, the apparatus for determining the value of the duration field can include:
a data receiving module 101 configured to receive a first frame transmitted by a target device in a first connection; and
a first generating module 102 configured to generate an acknowledgement message frame corresponding to the first frame and to be transmitted in a second connection, where in response to the first frame including one frame, a value of a duration field in the acknowledgement message frame corresponding to the first frame is determined according to states of respective frames to be transmitted in the first connection and the second connection.

In some examples, the first generating module 102 is configured to, in response to that there is no frame to be transmitted in both the first connection and the second connection, determining the value of the duration field in the acknowledgement message frame as 0.

In some examples, the first generating module 102 is configured to, in response to that there are one or more frames to be transmitted in either the first connection or the second connection, determining the value of the duration field in the acknowledgement message frame according to a value of a duration field in the first frame, a length of the first frame and a short inter-frame space.

In some examples, the first generating module 102 is configured to, in response to that there are a third frame to be transmitted in the first connection and a fourth frame to be transmitted in the second connection, determining the value of the duration field in the acknowledgement message frame according to a value of a duration field in the first frame, a length of the first frame, a short inter-frame space, a value of a duration field in a second frame received most recently in the second connection, a length of the second frame and a length of the acknowledgement message frame.

In some examples, the acknowledgement message frame further includes one or more preset bits configured to identify the states of the respective frames to be transmitted in the first connection and the second connection.

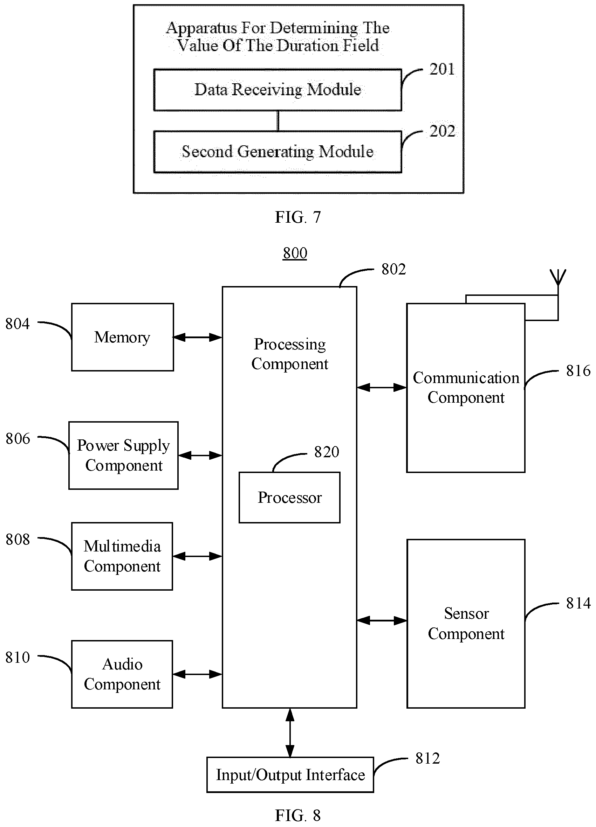

FIG. 7 is a schematic block diagram illustrating an apparatus for determining a value of a duration field according to an embodiment of the present disclosure. As shown in FIG. 7, the apparatus includes:
a data receiving module 201 configured to receive a first frame transmitted by a target device in a first connection; and
a second generating module 202 configured to generate a block acknowledgement message frame corresponding to the first frame and to be transmitted in the second connection, where in response to the first frame including a plurality of frames, a value of a duration field in the block acknowledgement message frame is determined according to a length of the block acknowledgement message frame where a plurality of pieces of acknowledgement information corresponding to the plurality of frames are located, a length of the plurality of pieces of acknowledgement information, a modulation and coding scheme of the block acknowledgement message frame and a short inter-frame space.

Regarding the apparatus in the above embodiment, the specific manner in which each module performs the operation has been described in detail in the embodiment of the method, and can be similarly applied to the apparatus that implements the method.

For the apparatus embodiment, since it basically corresponds to the method embodiment, the relevant part may refer to the part of the description of the method embodiment. The apparatus embodiments described above are merely illustrative, where the units described as separate components may or may not be physically separated, and the components displayed as units may or may not be physical units. That is, they may be located in one place or may be distributed to a plurality of network units. Some or all of the modules may be selected according to actual needs, to achieve the objectives of the solutions of the present disclosure. Those skilled in the art may understand and implement without creative labor.

According to the embodiments of the present disclosure, there is provided an electronic device, including:
a processor; and
a memory for storing instructions executable by the processor,
where the processor is configured to implement the method described in any one of the above embodiments.

According to the embodiments of the present disclosure, there is provided a computer readable storage medium storing a computer program, where the computer program, when executed by a processor, causes the processor to implement the steps of the method described in any one of the above embodiments.

FIG. 8 is a schematic block diagram illustrating an apparatus 800 for determining a value of a duration field according to an embodiment of the present disclosure. For example, the apparatus 800 can be a mobile telephone, a computer, a digital broadcasting terminal, a message receiving and transmitting device, a game console, a tablet device, a medical device, a fitness device, a personal digital assistant, and the like.

Referring to FIG. 8, the apparatus 800 may include one or more of the following components: a processing component 802, a memory 804, a power supply component 806, a multimedia component 808, an audio component 810, an input/output, I/O, interface 812, a sensor component 814 and a communication component 816.

The processing component 802 generally controls overall operations of the apparatus 800, such as operations associated with display, phone calls, data communications, camera operations, and recording operations. The processing component 802 may include one or more processors 820 to execute instructions to complete all or part of the steps of the above methods. In addition, the processing component 802 may include one or more modules that facilitate the interaction between the processing component 802 and other components. For example, the processing component 802 may include a multimedia module to facilitate the interaction between the multimedia component 808 and the processing component 802.

The memory 804 is to store various types of data to support the operation of the apparatus 800. Examples of such data include instructions for any application or method operated on the apparatus 800, contact data, phonebook data, messages, pictures, videos, and so on. The memory 804 may be implemented by any type of volatile or non-volatile storage devices or a combination thereof, such as a Static Random-Access Memory, SRAM, an Electrically-Erasable Programmable Read Only Memory, EEPROM, an Erasable Programmable Read Only Memory, EPROM, a Programmable read-only memory, PROM, a Read Only Memory, ROM, a magnetic memory, a flash memory, a magnetic or optical disk.

The power supply component 806 provides power to different components of the apparatus 800. The power supply component 806 may include a power management system, one or more power supplies, and other components associated with generating, managing, and distributing power for the apparatus 800.

The multimedia component 808 includes a screen providing an output interface between the apparatus 800 and a user. In some embodiments, the screen may include a Liquid Crystal Display, LCD, and a Touch Panel, TP. If the screen includes the TP, the screen may be implemented as a touch screen to receive input signals from the user. The TP may include one or more touch sensors to sense touches, swipes, and gestures on the TP. The touch sensors may not only sense a boundary of a touch or swipe, but also sense the duration and a pressure associated with the touch or swipe. In some embodiments, the multimedia component 808 may include a front camera and/or a rear camera. The front camera and/or rear camera may receive external multimedia data when the apparatus 800 is in an operating mode, such as a photographing mode or a video mode. Each of the front camera and the rear camera may be a fixed optical lens system or have focal length and optical zooming capability.

The audio component 810 is configured to output and/or input an audio signal. For example, the audio component 810 includes a microphone, MIC. When the apparatus 800 is in an operating mode, such as a call mode, a recording mode, and a voice recognition mode, the MIC is to receive an external audio signal. The received audio signal may be further stored in the memory 804 or transmitted via the communication component 816. In some embodiments, the audio component 810 further includes a speaker to output an audio signal.

The I/O interface 812 may provide an interface between the processing component 802 and peripheral interface modules. The above peripheral interface modules may include a keyboard, a click wheel, buttons, and so on. These buttons may include, but are not limited to, a home button, a volume button, a starting button and a locking button.

The sensor component 814 includes one or more sensors to provide status assessments of various aspects for the apparatus 800. For example, the sensor component 814 may detect the on/off status of the apparatus 800, and relative positioning of component, for example, the component is a display and a keypad of the apparatus 800. The sensor component 814 may also detect a change in position of the apparatus 800 or a component of the apparatus 800, a presence or absence of the contact between a user and the apparatus 800, an orientation or an acceleration/deceleration of the apparatus 800, and a change in temperature of the apparatus 800. The sensor component 814 may include a proximity sensor to detect the presence of a nearby object without any physical contact. The sensor component 814 may further include an optical sensor, such as a Complementary Metal Oxide Semiconductor, CMOS, or Charge-coupled Device, CCD, image sensor which is used in imaging applications. In some embodiments, the sensor component 814 may further include an acceleration sensor, a gyroscope sensor, a magnetic sensor, a pressure sensor, or a temperature sensor.

The communication component 816 is to facilitate wired or wireless communication between the apparatus 800 and other devices. The apparatus 800 may access a wireless network that is based on a communication standard, such as Wi-Fi, 2G or 3G, or a combination thereof. In an embodiment, the communication component 816 receives a broadcast signal or broadcast-associated information from an external broadcast management system via a broadcast channel. In an embodiment, the communication component 816 further includes a Near Field Communication, NFC, module to facilitate short-range communications. For example, the NFC module may be implemented based on a Radio Frequency Identification, RFID, technology, an Infrared Data Association, IrDA, technology, an Ultra-Wide Band, UWB, technology, a Blue Tooth, BT, technology and other technologies.

In an embodiment, the apparatus 800 may be implemented by one or more Application Specific Integrated Circuits, ASICs, Digital Signal Processors, DSPs, Digital Signal Processing Devices, DSPDs, Programmable Logic Devices, PLDs, Field Programmable Gate Arrays, FPGAs, controllers, microcontrollers, microprocessors, or other electronic components for performing the above method.

In an embodiment, there is also provided a non-transitory computer readable storage medium including instructions, such as the memory 804 including instructions. The instructions may be executed by the processor 820 of the apparatus 800 to perform the above described methods. For example, the non-transitory computer readable storage medium may be a ROM, a Random Access Memory, RAM, a CD-ROM, a magnetic tape, a floppy disk, an optical data storage device, and the like.

Other implementations of the present disclosure will be apparent to those skilled in the art from consideration of the specification and practice of the present disclosure herein. The present disclosure is intended to cover any variations, uses, modification or adaptations of the present disclosure that follow the general principles thereof and include common knowledge or conventional technical means in the art that are not disclosed in the present disclosure.

It should be understood that the present disclosure is not limited to the above described structures shown in the drawings, and various modifications and changes can be made to the present disclosure without departing from the scope thereof. The scope of the present disclosure is to be limited only by the appended claims.

It should be noted that the relational terms such as "first" and "second" used herein are merely intended to distinguish one entity or operation from another entity or operation rather than to require or imply any such actual relation or order existing between these entities or operations. Also, the terms "including," "containing," or any variation thereof is intended to cover non-exclusive inclusion, so that a process, method, article, or device including a series of elements includes not only those elements but also other elements not listed explicitly or those elements inherent to such a process, method, article, or device. Without more limitations, an element defined by the statement "including a ..." shall not be precluded from including additional same elements present in the process, method, article, or device including the elements.

The methods and apparatuses provided by the embodiments of the present disclosure have been described in detail above. Specific examples are used herein to explain the principles and implementations of the present disclosure. The description of the above embodiments is only used to help understand methods and core ideas in the present disclosure. The scope of protection of the invention is defined in the appended set of claims.

## Claims

1. A method for determining a value of a duration field, performed by a terminal (800), comprising:
receiving (S101) one or more first frames transmitted by a target device in a first connection;
and
generating (S102) an acknowledgement message frame corresponding to the one or more first frames and to be transmitted in a second connection, wherein in response to the one or more first frames including one frame, a value of a duration field in the acknowledgement message frame corresponding to the one or more first frames is determined according to states of respective frames to be transmitted in the first connection and the second connection;
wherein the first connection and the second connection are different connections under multi connection communication between the target device and the terminal (800); wherein different connections correspond to a different frequency band or to a different bandwidth part;
the value of the duration field indicates a length of time during which it is necessary for the terminal (800) to occupy the first connection and/or the second connection after the acknowledgement message frame is fed back by the terminal (800) to the target device; and
the states of the respective frames to be transmitted in the first connection and the second connection comprise: there is no frame to be transmitted in both the first connection and the second connection, or there are one or more frames to be transmitted in one of the first connection and the second connection, or there are one or more frames to be transmitted in both the first connection and the second connection.

2. The method according to claim 1, wherein the value of the duration field in the acknowledgement message frame corresponding to the one or more first frames is determined (S102) according to the states of the respective frames to be transmitted in the first connection and the second connection comprises:
in response to that there is no frame to be transmitted in both of the first connection and the second connection, determining (S1021) the value of the duration field in the acknowledgement message frame as 0.

3. The method according to claim 1, wherein the value of the duration field in the acknowledgement message frame corresponding to the one or more first frames is determined (S102) according to the states of the respective frames to be transmitted in the first connection and the second connection comprises:
in response to that there are one or more frames to be transmitted in either of the first connection or the second connection, determining (S1022) the value of the duration field in the acknowledgement message frame according to a value of a duration field in the one or more first frames, a length of the one or more first frames and a short inter-frame space;
wherein the value of the duration field in the one or more first frames is configured to indicate a length of time during which it is necessary for the terminal (800) to occupy the first connection and/or the second connection, wherein the length of time comprises the length of the one or more first frames, the short inter-frame space and a length of the respective frames to be transmitted in the first connection and/or the second connection.

4. The method according to claim 1, wherein the value of the duration field in the acknowledgement message frame corresponding to the one or more first frames is determined (S102) according to the states of the respective frames to be transmitted in the first connection and the second connection comprises:
in response to that there are a third frame to be transmitted in the first connection and a fourth frame to be transmitted in the second connection, determining (S1023) the value of the duration field in the acknowledgement message frame according to a value of a duration field in the one or more first frames, a length of the one or more first frames, a short inter-frame space, a value of a duration field in a second frame received most recently in the second connection, a length of the second frame and a length of the acknowledgement message frame;
wherein the value of the duration field in the one or more first frames is configured to indicate a length of time during which it is necessary for the terminal (800) to occupy the first connection, wherein the length of time during which it is necessary for the terminal (800) to occupy the first connection comprises the length of the one or more first frames, the short inter-frame space, and a length of the third frame to be transmitted in the first connection; and
the value of the duration field in the second frame is configured to indicate a length of time during which it is necessary for the terminal (800) to occupy the second connection, wherein the length of time during which it is necessary for the terminal (800) to occupy the second connection comprises the length of the second frame, the short inter-frame space, a length of the fourth frame to be transmitted in the second connection and the length of the acknowledgement message frame.

5. The method according to any one of claims 1 to 4, wherein the acknowledgement message frame further comprises one or more preset bits configured to identify the states of the respective frames to be transmitted in the first connection and the second connection;
wherein the states of the respective frames to be transmitted in the first connection and the second connection comprise: there is no frame to be transmitted in both the first connection and the second connection; there are one or more frames to be transmitted in one of the first connection and the second connection; there is a third frame to be transmitted in the first connection and a fourth frame to be transmitted in the second connection, and the third frame and the fourth frame are transmitted in the first connection; there is a third frame to be transmitted in the first connection and a fourth frame to be transmitted in the second connection, and the third frame and the fourth frame are transmitted in the second connection.

6. The method according to any one of claims 1 to 4, wherein generating (S102) the acknowledgement message frame corresponding to the one or more first frames and to be transmitted in the second connection comprises:
generating (S202) a block acknowledgement message frame corresponding to the one or more first frames and to be transmitted in the second connection, wherein in response to the one or more first frames including a plurality of frames, a value of a duration field in the block acknowledgement message frame is determined according to a length of the block acknowledgement message frame where a plurality of pieces of acknowledgement information corresponding to the plurality of frames are located, a length of the plurality of pieces of acknowledgement information, a modulation and coding scheme of the block acknowledgement message frame and a short inter-frame space.

7. The method according to claim 6, wherein the plurality of pieces of acknowledgement information are comprised in a bitmap.

8. A terminal (800), comprising:
a processor (820); and
a memory (804) for storing instructions executable by the processor (820),
wherein the processor (820) is configured to:
receive a one or more first frames transmitted by a target device in a first connection; and
generate an acknowledgement message frame corresponding to the one or more first frames and to be transmitted in a second connection, wherein in response to the one or more first frames including one frame, a value of a duration field in the acknowledgement message frame corresponding to the one or more first frames is determined according to states of respective frames to be transmitted in the first connection and the second connection;
wherein the first connection and the second connection are different connections under multi connection communication between the target device and the terminal (800); wherein different connections correspond to a different frequency band or to a different bandwidth part;
the value of the duration field indicates a length of time during which it is necessary for the terminal (800) to occupy the first connection and/or the second connection after the acknowledgement message frame is fed back by the terminal (800) to the target device; and
the states of the respective frames to be transmitted in the first connection and the second connection comprise: there is no frame to be transmitted in both the first connection and the second connection, or there are one or more frames to be transmitted in one of the first connection and the second connection, or there are one or more frames to be transmitted in both the first connection and the second connection.

9. The terminal (800) according to claim 8, wherein the processor (820) is further configured to:
in response to that there is no frame to be transmitted in both the first connection and the second connection, determine the value of the duration field in the acknowledgement message frame as 0.

10. The terminal (800) according to claim 8, wherein the processor (820) is further configured to:
in response to that there are one or more frames to be transmitted in either the first connection or the second connection, determine the value of the duration field in the acknowledgement message frame according to a value of a duration field in the one or more first frames, a length of the one or more first frames and a short inter-frame space;
wherein the value of the duration field in the one or more first frames is configured to indicate a length of time during which it is necessary for the terminal (800) to occupy the first connection and/or the second connection, wherein the length of time comprises the length of the one or more first frames, the short inter-frame space and a length of the respective frames to be transmitted in the first connection and/or the second connection.

11. The terminal (800) according to claim 8, wherein the processor (820) is further configured to:
in response to that there are a third frame to be transmitted in the first connection and a fourth frame to be transmitted in the second connection, determine the value of the duration field in the acknowledgement message frame according to a value of a duration field in the one or more first frames, a length of the one or more first frames, a short inter-frame space, a value of a duration field in a second frame received most recently in the second connection, a length of the second frame and a length of the acknowledgement message frame;
wherein the value of the duration field in the one or more first frames is configured to indicate a length of time during which it is necessary for the terminal (800) to occupy the first connection, wherein the length of time during which it is necessary for the terminal (800) to occupy the first connection comprises the length of the one or more first frames, the short inter-frame space, and a length of the third frame to be transmitted in the first connection; and
the value of the duration field in the second frame is configured to indicate a length of time during which it is necessary for the terminal (800) to occupy the second connection, wherein the length of time during which it is necessary for the terminal (800) to occupy the second connection comprises the length of the second frame, the short inter-frame space, a length of the fourth frame to be transmitted in the second connection and the length of the acknowledgement message frame.

12. The terminal (800) according to any one of claims 8 to 11, wherein the acknowledgement message frame further comprises one or more preset bits configured to identify the states of the respective frames to be transmitted in the first connection and the second connection;
wherein the states of the respective frames to be transmitted in the first connection and the second connection comprise: there is no frame to be transmitted in both the first connection and the second connection; there are one or more frames to be transmitted in one of the first connection and the second connection; there is a third frame to be transmitted in the first connection and a fourth frame to be transmitted in the second connection, and the third frame and the fourth frame are transmitted in the first connection; there is a third frame to be transmitted in the first connection and a fourth frame to be transmitted in the second connection, and the third frame and the fourth frame are transmitted in the second connection.

13. The terminal (800) according to any one of claims 8 to 11, wherein the processor (820) is further configured to:
generate a block acknowledgement message frame corresponding to the one or more first frames and to be transmitted in the second connection, wherein in response to the one or more first frames including a plurality of frames, a value of a duration field in the block acknowledgement message frame is determined according to a length of the block acknowledgement message frame where a plurality of pieces of acknowledgement information corresponding to the plurality of frames are located, a length of the plurality of pieces of acknowledgement information, a modulation and coding scheme of the block acknowledgement message frame and a short inter-frame space.

14. The terminal (800) according to claim 13, wherein the plurality of pieces of acknowledgement information are comprised in a bitmap.

15. A computer readable storage medium comprising instructions which, when executed by a computer, cause the computer to carry out the steps of the method according to any one of claims 1 to 7.

## Patentansprüche

1. Verfahren zum Bestimmen eines Werts eines Dauerfeldes, das von einem Endgerät (800) durchgeführt wird, umfassend:
Empfangen (S101) eines oder mehrerer erster Frames, die von einem Zielgerät in einer ersten Verbindung gesendet werden; und
Erzeugen (S102) eines Bestätigungsnachricht-Frames, der dem einen oder den mehreren ersten Frames entspricht und in einer zweiten Verbindung übertragen werden soll, wobei als Reaktion auf den einen oder die mehreren ersten Frames, die einen Frame aufweisen, ein Wert eines Dauerfeldes in dem Bestätigungsnachricht-Frame, der dem einen oder den mehreren ersten Frames entspricht, entsprechend den Zuständen der jeweiligen Frames, die in der ersten Verbindung und der zweiten Verbindung übertragen werden sollen, bestimmt wird;
wobei die erste Verbindung und die zweite Verbindung unterschiedliche Verbindungen im Rahmen einer Mehrfachverbindungskommunikation zwischen dem Zielgerät und dem Endgerät (800) sind;
wobei verschiedene Verbindungen einem anderen Frequenzband oder einem anderen Bandbreitenabschnitt entsprechen;
wobei der Wert des Dauerfeldes eine Zeitspanne angibt, während der das Endgerät (800) die erste Verbindung und/oder die zweite Verbindung belegen muss, nachdem der Bestätigungsnachricht-Frame vom Endgerät (800) an das Zielgerät zurückgespeist wurde; und
die Zustände der jeweiligen Frames, die in der ersten Verbindung und der zweiten Verbindung übertragen werden sollen, umfassen: es ist kein in der ersten Verbindung oder in der zweiten Verbindung zu übertragender Frame vorhanden, oder es sind ein oder mehrere in der ersten Verbindung oder der zweiten Verbindung zu übertragende Frames vorhanden, oder es sind ein oder mehrere in der ersten Verbindung und in der zweiten Verbindung zu übertragende Frames vorhanden.

2. Verfahren nach Anspruch 1, wobei der Wert des Dauerfeldes in dem Bestätigungsnachricht-Frame, der dem einen oder den mehreren ersten Frames entspricht, entsprechend den Zuständen der jeweiligen Frames, die in der ersten Verbindung und der zweiten Verbindung übertragen werden sollen, bestimmt wird (S102), umfassend:
als Reaktion darauf, dass kein in der ersten Verbindung und in der zweiten Verbindung zu übertragender Frame vorhanden ist, Bestimmen (S1021) des Werts des Dauerfeldes im Bestätigungsnachricht-Frame als 0.

3. Verfahren nach Anspruch 1, wobei der Wert des Dauerfeldes in dem Bestätigungsnachricht-Frame, der dem einen oder den mehreren ersten Frames entspricht, entsprechend den Zuständen der jeweiligen Frames, die in der ersten Verbindung und der zweiten Verbindung übertragen werden sollen, bestimmt wird (S102), umfassend:
als Reaktion darauf, dass ein oder mehrere in der ersten Verbindung oder der zweiten Verbindung zu übertragende Frames vorhanden sind, Bestimmen (S1022) des Werts des Dauerfeldes im Bestätigungsnachricht-Frame entsprechend einem Wert eines Dauerfeldes in dem einen oder den mehreren ersten Frames, einer Länge des einen oder der mehreren ersten Frames und einem kurzen Abstand zwischen den Frames;
wobei der Wert des Dauerfeldes in dem einen oder den mehreren ersten Frames so ausgebildet ist, dass er eine Zeitspanne angibt, während der es erforderlich ist, dass das Endgerät (800) die erste Verbindung und/oder die zweite Verbindung belegt, wobei die Zeitspanne die Länge des einen oder der mehreren ersten Frames, den kurzen Abstand zwischen den Frames und eine Länge der jeweiligen Frames umfasst, die in der ersten Verbindung und/oder der zweiten Verbindung übertragen werden sollen.

4. Verfahren nach Anspruch 1, wobei der Wert des Dauerfeldes in dem Bestätigungsnachricht-Frame, der dem einen oder den mehreren ersten Frames entspricht, entsprechend den Zuständen der jeweiligen Frames, die in der ersten Verbindung und der zweiten Verbindung übertragen werden sollen, bestimmt wird (S102), umfassend:
als Reaktion darauf, dass ein in der ersten Verbindung zu übertragender dritter Frame und ein in der zweiten Verbindung zu übertragender vierter Frame vorhanden sind, Bestimmen (S1023) des Werts des Dauerfeldes im Bestätigungsnachricht-Frame entsprechend einem Wert eines Dauerfeldes in dem einen oder den mehreren ersten Frames, einer Länge des einen oder der mehreren ersten Frames, einem kurzen Abstand zwischen den Frames, einem Wert eines Dauerfeldes in einem zweiten Frame, der zuletzt in der zweiten Verbindung empfangen wurde, einer Länge des zweiten Frames und einer Länge des Bestätigungsnachricht-Frames;
wobei der Wert des Dauerfeldes in dem einen oder den mehreren ersten Frames so ausgebildet ist, dass er eine Zeitspanne angibt, während der es erforderlich ist, dass das Endgerät (800) die erste Verbindung belegt, wobei die Zeitspanne, während der es erforderlich ist, dass das Endgerät (800) die erste Verbindung belegt, die Länge des einen oder der mehreren ersten Frames, den kurzen Abstand zwischen den Frames und eine Länge des dritten Frames umfasst, die in der ersten Verbindung übertragen werden sollen; und
wobei der Wert des Dauerfeldes in dem zweiten Frame so ausgebildet ist, dass er eine Zeitspanne angibt, während der es erforderlich ist, dass das Endgerät (800) die zweite Verbindung belegt, wobei die Zeitspanne, während der es erforderlich ist, dass das Endgerät (800) die zweite Verbindung belegt, die Länge des zweiten Frames, den kurzen Abstand zwischen den Frames, eine Länge des vierten Frames, der in der zweiten Verbindung übertragen werden soll, und die Länge des Bestätigungsnachricht-Frames umfasst.

5. Verfahren nach einem der Ansprüche 1 bis 4, wobei der Bestätigungsnachricht-Frame ferner einen oder mehrere voreingestellte Bits aufweist, die dazu ausgebildet sind, die Zustände der jeweiligen Frames, die in der ersten Verbindung und der zweiten Verbindung übertragen werden sollen, zu identifizieren;
wobei die Zustände der jeweiligen Frames, die in der ersten Verbindung und der zweiten Verbindung übertragen werden sollen, umfassen: es ist kein in der ersten Verbindung oder in der zweiten Verbindung zu übertragender Frame vorhanden, es sind ein oder mehrere in der ersten Verbindung oder der zweiten Verbindung zu übertragende Frames vorhanden, es sind ein in der ersten Verbindung zu übertragender dritter Frame und ein in der zweiten Verbindung zu übertragender vierter Frame vorhanden, und der dritte Frame und der vierte Frame werden in der ersten Verbindung übertragen; es sind ein in der ersten Verbindung zu übertragender dritter Frame und ein in der zweiten Verbindung zu übertragender vierter Frame vorhanden, und der dritte Frame und der vierte Frame werden in der zweiten Verbindung übertragen.

6. Verfahren nach einem der Ansprüche 1 bis 4, wobei das Erzeugen (S102) des Bestätigungsnachricht-Frames, der dem einen oder den mehreren ersten Frames entspricht und in der zweiten Verbindung übertragen werden soll, umfasst:
Erzeugen (S202) eines Blockbestätigungsnachricht-Frames, der dem einen oder den mehreren ersten Frames entspricht und in der zweiten Verbindung übertragen werden soll, wobei als Reaktion darauf, dass der eine oder die mehreren ersten Frames eine Vielzahl von Frames aufweisen, ein Wert eines Dauerfeldes in dem Blockbestätigungsnachricht-Frame entsprechend einer Länge des Blockbestätigungsnachricht-Frames, in dem sich eine Vielzahl von einzelnen Bestätigungsinformationen befinden, die der Vielzahl von Frames entsprechen, einer Länge der Vielzahl von einzelnen Bestätigungsinformationen, einem Modulations- und Codierungsschema des Blockbestätigungsnachricht-Frames und einem kurzen Abstand zwischen den Frames bestimmt wird.

7. Verfahren nach Anspruch 6, wobei die Vielzahl von einzelnen Bestätigungsinformationen in einer Bitmap enthalten sind.

8. Endgerät (800), das aufweist:
einen Prozessor (820); und
einen Speicher (804) zum Speichern von Anweisungen, die von dem Prozessor (820) ausführbar sind;
wobei der Prozessor (820) für Folgendes ausgebildet ist:
Empfangen eines oder mehrerer erster Frames, die von einem Zielgerät in einer ersten Verbindung gesendet werden; und
Erzeugen eines Bestätigungsnachricht-Frames, der dem einen oder den mehreren ersten Frames entspricht und in einer zweiten Verbindung übertragen werden soll, wobei als Reaktion auf den einen oder die mehreren ersten Frames, die einen Frame aufweisen, ein Wert eines Dauerfeldes in dem Bestätigungsnachricht-Frame, der dem einen oder den mehreren ersten Frames entspricht, entsprechend den Zuständen der jeweiligen Frames, die in der ersten Verbindung und der zweiten Verbindung übertragen werden sollen, bestimmt wird;
wobei die erste Verbindung und die zweite Verbindung unterschiedliche Verbindungen im Rahmen einer Mehrfachverbindungskommunikation zwischen dem Zielgerät und dem Endgerät (800) sind;
wobei verschiedene Verbindungen einem anderen Frequenzband oder einem anderen Bandbreitenabschnitt entsprechen;
wobei der Wert des Dauerfeldes eine Zeitspanne angibt, während der das Endgerät (800) die erste Verbindung und/oder die zweite Verbindung belegen muss, nachdem der Bestätigungsnachricht-Frame vom Endgerät (800) an das Zielgerät zurückgespeist wurde; und
die Zustände der jeweiligen Frames, die in der ersten Verbindung und der zweiten Verbindung übertragen werden sollen, umfassen: es ist kein in der ersten Verbindung oder in der zweiten Verbindung zu übertragender Frame vorhanden, oder es sind ein oder mehrere in der ersten Verbindung oder der zweiten Verbindung zu übertragende Frames vorhanden, oder es sind ein oder mehrere in der ersten Verbindung und in der zweiten Verbindung zu übertragende Frames vorhanden.

9. Endgerät (800) nach Anspruch 8, wobei der Prozessor (820) ferner für Folgendes ausgebildet ist:
als Reaktion darauf, dass kein in der ersten Verbindung oder in der zweiten Verbindung zu übertragender Frame vorhanden ist, Bestimmen des Werts des Dauerfeldes im Bestätigungsnachricht-Frame als 0.

10. Endgerät (800) nach Anspruch 8, wobei der Prozessor (820) ferner für Folgendes ausgebildet ist:
als Reaktion darauf, dass ein oder mehrere in der ersten oder der zweiten Verbindung zu übertragende Frames vorhanden sind, Bestimmen des Werts des Dauerfeldes im Bestätigungsnachricht-Frame entsprechend einem Wert eines Dauerfeldes in dem einen oder den mehreren ersten Frames, einer Länge des einen oder der mehreren ersten Frames und einem kurzen Abstand zwischen den Frames;
wobei der Wert des Dauerfeldes in dem einen oder den mehreren ersten Frames so ausgebildet ist, dass er eine Zeitspanne angibt, während der es erforderlich ist, dass das Endgerät (800) die erste Verbindung und/oder die zweite Verbindung belegt, wobei die Zeitspanne die Länge des einen oder der mehreren ersten Frames, den kurzen Abstand zwischen den Frames und eine Länge der jeweiligen Frames umfasst, die in der ersten Verbindung und/oder der zweiten Verbindung übertragen werden sollen.

11. Endgerät (800) nach Anspruch 8, wobei der Prozessor (820) ferner für Folgendes ausgebildet ist:
als Reaktion darauf, dass ein in der ersten Verbindung zu übertragender dritter Frame und ein in der zweiten Verbindung zu übertragender vierter Frame vorhanden sind, Bestimmen des Werts des Dauerfeldes im Bestätigungsnachricht-Frame entsprechend einem Wert eines Dauerfeldes in dem einen oder den mehreren ersten Frames, einer Länge des einen oder der mehreren ersten Frames, einem kurzen Abstand zwischen den Frames, einem Wert eines Dauerfeldes in einem zweiten Frame, der zuletzt in der zweiten Verbindung empfangen wurde, einer Länge des zweiten Frames und einer Länge des Bestätigungsnachricht-Frames;
wobei der Wert des Dauerfeldes in dem einen oder den mehreren ersten Frames so ausgebildet ist, dass er eine Zeitspanne angibt, während der es erforderlich ist, dass das Endgerät (800) die erste Verbindung belegt, wobei die Zeitspanne, während der es erforderlich ist, dass das Endgerät (800) die erste Verbindung belegt, die Länge des einen oder der mehreren ersten Frames, den kurzen Abstand zwischen den Frames und eine Länge des dritten Frames umfasst, die in der ersten Verbindung übertragen werden sollen; und
wobei der Wert des Dauerfeldes in dem zweiten Frame so ausgebildet ist, dass er eine Zeitspanne angibt, während der es erforderlich ist, dass das Endgerät (800) die zweite Verbindung belegt, wobei die Zeitspanne, während der es erforderlich ist, dass das Endgerät (800) die zweite Verbindung belegt, die Länge des zweiten Frames, den kurzen Abstand zwischen den Frames, eine Länge des vierten Frames, der in der zweiten Verbindung übertragen werden soll, und die Länge des Bestätigungsnachricht-Frames umfasst.

12. Endgerät (800) nach einem der Ansprüche 8 bis 11, wobei der Bestätigungsnachricht-Frame ferner einen oder mehrere voreingestellte Bits aufweist, die dazu ausgebildet sind, die Zustände der jeweiligen Frames, die in der ersten Verbindung und der zweiten Verbindung übertragen werden sollen, zu identifizieren;
wobei die Zustände der jeweiligen Frames, die in der ersten Verbindung und der zweiten Verbindung übertragen werden sollen, umfassen: es ist kein in der ersten Verbindung oder in der zweiten Verbindung zu übertragender Frame vorhanden, es sind ein oder mehrere in der ersten Verbindung oder der zweiten Verbindung zu übertragende Frames vorhanden, es sind ein in der ersten Verbindung zu übertragender dritter Frame und ein in der zweiten Verbindung zu übertragender vierter Frame vorhanden, und der dritte Frame und der vierte Frame werden in der ersten Verbindung übertragen; es sind ein in der ersten Verbindung zu übertragender dritter Frame und ein in der zweiten Verbindung zu übertragender vierter Frame vorhanden, und der dritte Frame und der vierte Frame werden in der zweiten Verbindung übertragen.

13. Endgerät (800) nach einem der Ansprüche 8 bis 11, wobei der Prozessor (820) ferner für Folgendes ausgebildet ist:
Erzeugen eines Blockbestätigungsnachricht-Frames, der dem einen oder den mehreren ersten Frames entspricht und in der zweiten Verbindung übertragen werden soll, wobei als Reaktion darauf, dass der eine oder die mehreren ersten Frames eine Vielzahl von Frames aufweisen, ein Wert eines Dauerfeldes in dem Blockbestätigungsnachricht-Frame entsprechend einer Länge des Blockbestätigungsnachricht-Frames, in dem sich eine Vielzahl von einzelnen Bestätigungsinformationen befinden, die der Vielzahl von Frames entsprechen, einer Länge der Vielzahl von einzelnen Bestätigungsinformationen, einem Modulations- und Codierungsschema des Blockbestätigungsnachricht-Frames und einem kurzen Abstand zwischen den Frames bestimmt wird.

14. Endgerät (800) nach Anspruch 13, wobei die Vielzahl von einzelnen Bestätigungsinformationen in einer Bitmap enthalten sind.

15. Computerlesbares Speichermedium, das Anweisungen aufweist, die bei der Ausführung durch einen Computer den Computer veranlassen, die Schritte des Verfahrens nach einem der Ansprüche 1 bis 7 auszuführen.

## Revendications

1. Procédé de détermination d'une valeur d'un champ de durée, mis en œuvre par un terminal (800), comprenant les étapes consistant à :
recevoir (S101) une ou plusieurs premières trames transmises par un dispositif cible lors de l'une première connexion ; et
générer (S102) une trame de message d'accusé de réception correspondant à la ou aux premières trames et à transmettre lors de l'une seconde connexion, dans lequel, en réponse à la ou aux premières trames comprenant une trame, une valeur d'un champ de durée de la trame de message d'accusé de réception correspondant à la ou aux premières trames est déterminée conformément à des états de trames respectives à transmettre lors de la première connexion et de la seconde connexion ;
dans lequel la première connexion et la seconde connexion sont des connexions différentes sous une communication multi-connexion entre le dispositif cible et le terminal (800) ; dans lequel différentes connexions correspondent à une bande de fréquences différente ou à une partie de largeur de bande différente ;
la valeur du champ de durée indique une longueur de temps pendant laquelle il est nécessaire que le terminal (800) occupe la première connexion et/ou la seconde connexion après un renvoi de la trame de message d'accusé de réception par le terminal (800) au dispositif cible ; et
les états des trames respectives à transmettre lors de la première connexion et de la seconde connexion comprennent : une absence de trame à transmettre à la fois lors de la première connexion et de la seconde connexion, ou une présence d'une ou de plusieurs trames à transmettre lors de l'une de la première connexion et de la seconde connexion, ou une présence d'une ou de plusieurs trames à transmettre à la fois lors de la première connexion et de la seconde connexion.

2. Procédé selon la revendication 1, dans lequel l'étape selon laquelle la valeur du champ de durée de la trame de message d'accusé de réception correspondant à la ou aux premières trames est déterminée (S102) conformément aux états des trames respectives à transmettre lors de la première connexion et de la seconde connexion comprend l'étape consistant à :
en réponse à une absence de trame à transmettre à la fois lors de la première connexion et de la seconde connexion, déterminer (S1021) la valeur du champ de durée de la trame de message d'accusé de réception comme étant 0.

3. Procédé selon la revendication 1, dans lequel l'étape selon laquelle la valeur du champ de durée de la trame de message d'accusé de réception correspondant à la ou aux premières trames est déterminée (S102) conformément aux états des trames respectives à transmettre lors de la première connexion et de la seconde connexion comprend l'étape consistant à :
en réponse à la présence d'une ou de plusieurs trames à transmettre soit lors de la première connexion soit lors de la seconde connexion, déterminer (S1022) la valeur du champ de durée de la trame de message d'accusé de réception conformément à une valeur d'un champ de durée de la ou des plusieurs premières trames, à une longueur de la ou des premières trames et à un intervalle court entre trames ;
dans lequel la valeur du champ de durée de la ou des premières trames est configurée pour indiquer une longueur de temps pendant laquelle il est nécessaire que le terminal (800) occupe la première connexion et/ou la seconde connexion, dans lequel la longueur de temps comprend la longueur de la ou des premières trames, l'intervalle court entre trames et une longueur des trames respectives à transmettre lors de la première connexion et/ou de la seconde connexion.

4. Procédé selon la revendication 1, dans lequel l'étape selon laquelle la valeur du champ de durée de la trame de message d'accusé de réception correspondant à la ou aux premières trames est déterminée (S102) conformément aux états des trames respectives à transmettre lors de la première connexion et de la seconde connexion comprend l'étape consistant à :
en réponse à la présence d'une troisième trame à transmettre lors de la première connexion et d'une quatrième trame à transmettre lors de la seconde connexion, déterminer (S1023) la valeur du champ de durée de la trame de message d'accusé de réception conformément à une valeur d'un champ de durée de la ou des premières trames, à une longueur de la ou des premières trames, à un intervalle court entre trames, à une valeur d'un champ de durée d'une deuxième trame reçue en dernier lors de la seconde connexion, à une longueur de la deuxième trame et à une longueur de la trame de message d'accusé de réception ;
dans lequel la valeur du champ de durée de la ou des premières trames est configurée pour indiquer une longueur de temps pendant laquelle il est nécessaire que le terminal (800) occupe la première connexion, dans lequel la longueur de temps pendant laquelle il est nécessaire que le terminal (800) occupe la première connexion comprend la longueur de la ou des premières trames, l'intervalle court entre trames, et une longueur de la troisième trame à transmettre lors de la première connexion ; et
la valeur du champ de durée de la deuxième trame est configurée pour indiquer une longueur de temps pendant laquelle il est nécessaire que le terminal (800) occupe la seconde connexion, dans lequel la longueur de temps pendant laquelle il est nécessaire que le terminal (800) occupe la seconde connexion comprend la longueur de la deuxième trame, l'intervalle court entre trames, une longueur de la quatrième trame à transmettre lors de la seconde connexion et la longueur de la trame de message d'accusé de réception.

5. Procédé selon l'une quelconque des revendications 1 à 4, dans lequel la trame de message d'accusé de réception comprend en outre un ou plusieurs bits prédéfinis configurés pour identifier les états des trames respectives à transmettre lors de la première connexion et de la seconde connexion ;
dans lequel les états des trames respectives à transmettre lors de la première connexion et de la seconde connexion comprennent : une absence de trame à transmettre à la fois lors de la première connexion et de la seconde connexion ; une présence d'une ou de plusieurs trames à transmettre lors de l'une de la première connexion et de la seconde connexion ; une présence d'une troisième trame à transmettre lors de la première connexion et d'une quatrième trame à transmettre lors de la seconde connexion, et la troisième trame et la quatrième trame sont transmises lors de la première connexion ; une présence d'une troisième trame à transmettre lors de la première connexion et d'une quatrième trame à transmettre lors de la seconde connexion, et la troisième trame et la quatrième trame sont transmises lors de la seconde connexion.

6. Procédé selon l'une quelconque des revendications 1 à 4, dans lequel l'étape de génération (S102) de la trame de message d'accusé de réception correspondant à la ou aux premières trames à transmettre lors de la seconde connexion comprend l'étape consistant à :
générer (S202) une trame de message d'accusé de réception de bloc correspondant à la ou aux premières trames et à transmettre lors de la seconde connexion, dans lequel, en réponse à la ou aux premières trames comprenant une pluralité de trames, une valeur d'un champ de durée de la trame de message d'accusé de réception de bloc est déterminée conformément à une longueur de la trame de message d'accusé de réception de bloc dans laquelle se trouve une pluralité d'éléments d'information d'accusé de réception correspondant aux trames de la pluralité de trames, à une longueur des éléments de la pluralité d'éléments d'information d'accusé de réception, à un schéma de modulation et de codage de la trame de message d'accusé de réception de bloc et à un intervalle court entre trames.

7. Procédé selon la revendication 6, dans lequel les éléments de la pluralité d'éléments d'information d'accusé de réception sont compris dans une table de bits.

8. Terminal (800), comprenant :
un processeur (820) ; et
une mémoire (804) destinée à maintenir des instructions exécutables par le processeur (820),
dans lequel le processeur (820) est configuré pour :
recevoir une ou plusieurs premières trames transmises par un dispositif cible lors de l'une première connexion ; et
générer une trame de message d'accusé de réception correspondant à la ou aux premières trames et à transmettre lors de l'une seconde connexion, dans lequel, en réponse à la ou aux premières trames comprenant une trame, une valeur d'un champ de durée d'une trame de message d'accusé de réception correspondant à la ou aux premières trames est déterminée conformément à des états de trames respectives à transmettre lors de la première connexion et de la seconde connexion ;
dans lequel la première connexion et la seconde connexion sont des connexions différentes sous une communication multi-connexion entre le dispositif cible et le terminal (800) ; dans lequel différentes connexions correspondent à une bande de fréquences différente ou à une partie de largeur de bande différente ;
la valeur du champ de durée indique une longueur de temps pendant laquelle il est nécessaire que le terminal (800) occupe la première connexion et/ou la seconde connexion après un renvoi de la trame de message d'accusé de réception par le terminal (800) au dispositif cible ; et
les états des trames respectives à transmettre lors de la première connexion et de la seconde connexion comprennent : une absence de trame à transmettre à la fois lors de la première connexion et de la seconde connexion, ou une présence d'une ou de plusieurs trames à transmettre lors de l'une de la première connexion et de la seconde connexion, ou la présence d'une ou de plusieurs trames à transmettre à la fois lors de la première connexion et de la seconde connexion.

9. Terminal (800) selon la revendication 8, dans lequel le processeur (820) est en outre configuré pour :
en réponse à l'absence de trame à transmettre à la fois lors de la première connexion et de la seconde connexion, déterminer la valeur du champ de durée de la trame de message d'accusé de réception comme étant 0.

10. Terminal (800) selon la revendication 8, dans lequel le processeur (820) est en outre configuré pour :
en réponse à la présence d'une ou de plusieurs trames à transmettre soit lors de la première connexion soit lors de la seconde connexion, déterminer la valeur du champ de durée de la trame de message d'accusé de réception conformément à une valeur d'un champ de durée de la ou des premières trames, à une longueur de la ou des premières trames et à un intervalle court entre trames ;
dans lequel la valeur du champ de durée de la ou des premières trames est configurée pour indiquer une longueur de temps pendant laquelle il est nécessaire que le terminal (800) occupe la première connexion et/ou la seconde connexion, dans lequel la longueur de temps comprend la longueur de la ou des premières trames, l'intervalle court entre trames et une longueur des trames respectives à transmettre lors de la première connexion et/ou de la seconde connexion.

11. Terminal (800) selon la revendication 8, dans lequel le processeur (820) est en outre configuré pour :
en réponse à la présence d'une troisième trame à transmettre lors de la première connexion et d'une quatrième trame à transmettre lors de la seconde connexion, déterminer la valeur du champ de durée de la trame de message d'accusé de réception conformément à une valeur d'un champ de durée de la ou des premières trames, à une longueur de la ou des premières trames, à un intervalle court entre trames, à une valeur d'un champ de durée d'une deuxième trame reçue en dernier lors de la seconde connexion, à une longueur de la deuxième trame et à une longueur de la trame de message d'accusé de réception ;
dans lequel la valeur du champ de durée de la ou des premières trames est configurée pour indiquer une longueur de temps pendant laquelle il est nécessaire que le terminal (800) occupe la première connexion, dans lequel la longueur de temps pendant laquelle il est nécessaire que le terminal (800) occupe la première connexion comprend la longueur de la ou des premières trames, l'intervalle court entre trames, et une longueur de la troisième trame à transmettre lors de la première connexion ; et
la valeur du champ de durée de la deuxième trame est configurée pour indiquer une longueur de temps pendant laquelle il est nécessaire que le terminal (800) occupe la seconde connexion, dans lequel la longueur de temps pendant laquelle il est nécessaire que le terminal (800) occupe la seconde connexion comprend la longueur de la deuxième trame, l'intervalle court entre trames, une longueur de la quatrième trame à transmettre lors de la seconde connexion et la longueur de la trame de message d'accusé de réception.

12. Terminal (800) selon l'une quelconque des revendications 8 à 11, dans lequel la trame de message d'accusé de réception comprend en outre un ou plusieurs bits prédéfinis configurés pour indiquer les états des trames respectives à transmettre lors de la première connexion et de la seconde connexion ;
dans lequel les états des trames respectives à transmettre lors de la première connexion et de la seconde connexion comprennent : une absence de trame à transmettre à la fois lors de la première connexion et de la seconde connexion ; une présence d'une ou de plusieurs trames à transmettre lors de l'une de la première connexion et de la seconde connexion ; une présence d'une troisième trame à transmettre lors de la première connexion et d'une quatrième trame à transmettre lors de la seconde connexion, et la troisième trame et la quatrième trame sont transmises lors de la première connexion ; une présence d'une troisième trame à transmettre lors de la première connexion et d'une quatrième trame à transmettre lors de la seconde connexion, et la troisième trame et la quatrième trame sont transmises lors de la seconde connexion.

13. Terminal (800) selon l'une quelconque des revendications 8 à 11, dans lequel le processeur (820) est en outre configuré pour :
générer une trame de message d'accusé de réception de bloc correspondant à la ou aux premières trames et à transmettre lors de la seconde connexion, dans lequel, en réponse à la ou aux premières trames comprenant une pluralité de trames, une valeur d'un champ de durée de la trame de message d'accusé de réception de bloc est déterminée conformément à une longueur de la trame de message d'accusé de réception de bloc dans laquelle se trouve une pluralité d'éléments d'information d'accusé de réception correspondant aux trames de la pluralité de trames, à une longueur des éléments de la pluralité d'éléments d'information d'accusé de réception, à un schéma de modulation et de codage de la trame de message d'accusé de réception de bloc et à un intervalle court entre trames.

14. Terminal (800) selon la revendication 13, dans lequel les éléments de la pluralité d'éléments d'information d'accusé de réception sont compris dans une table de bits.

15. Support d'informations lisible par ordinateur comprenant des instructions qui, lorsqu'elles sont exécutées par un ordinateur, amènent l'ordinateur à exécuter les étapes du procédé selon l'une quelconque des revendications 1 à 7.
